# FASCICULE DE BREVET EUROPEEN

(11) **EP 1 496 205 B1**
(45) Date de publication et mention de la délivrance du brevet: **20.09.2006**
(21) Numéro de dépôt: 04291604.9
(22) Date de dépôt: 25.06.2004
(51) Int. Cl.: F01D 5/18

(54) **Aubes refroidies de moteur à turbine à gaz**
Gekühlte Gasturbinenschaufel
Cooled blade for a gas turbine engine

(30) Priorité: 30.06.2003 FR 0307894
(43) Date de publication de la demande: 12.01.2005
(73) Titulaire: SNECMA, 75015 Paris (FR)
(72) Inventeur: Pabion, Philippe, Jean-Pierre, 77000 Vaux le Penil (FR); Soupizon, Jean-Luc, 77000 Vaux le Penil (FR); Guimbard, Jean-Michel, Bernard, 77930 Perthes (FR)
(74) Mandataire: David, Daniel

(56) Documents cités:
- EP-A- 0 974 733
- EP-A- 1 164 250
- US-A- 4 288 201
- US-A- 6 109 867

## Description

La présente invention concerne le refroidissement d'aubes dans un moteur à turbine à gaz et en particulier d'aubes de distributeur de turbine.

Les aubes de distributeurs de turbine dans les turbomoteurs sont parcourues par des gaz à des températures élevées qui sont issus de la chambre de combustion. Pour leur permettre de résister aux sévères conditions de fonctionnement auxquelles elles sont soumises, les aubes sont pourvues des moyens de refroidissement de leur parois par circulation d'air prélevé au niveau du compresseur, par exemple. Il s'agit généralement de moyens de refroidissement par convection forcée ou bien par impact.

L'invention concerne les aubes fixes de distributeur, creuses et élaborées par fonderie en superalliage. Selon cette technique, le métal est coulé dans un moule autour d'un noyau qui, après son retrait, ménage une cavité. On incorpore un insert ou chemise dans cette cavité pour organiser la circulation du fluide de refroidissement. Une telle aube est décrite dans le document US-A- 4 288 201.

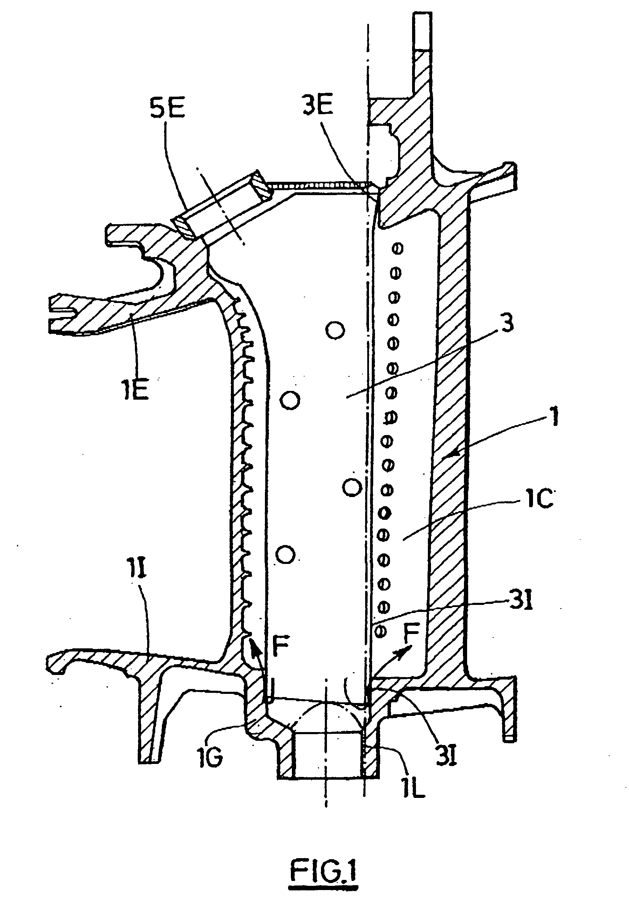

On a représenté sur la figure 1, une aube de distributeur que l'on utilise actuellement dans certains moteurs aéronautiques, du type CFM56 par exemple. Il s'agit ici d'une aube 1 de distributeur basse pression avec ses deux plate-formes, l'une 1E extérieure, l'autre 1I intérieure, délimitant le canal annulaire dans lequel circule le gaz. Ce canal est subdivisé circonférentiellement par les aubes 1. Chaque aube 1 est équipée d'une chemise 3 interne multi-perforée, dans sa cavité centrale 1C. Dans la réalisation de la figure 1, on distingue un conduit central à l'intérieur de la chemise elle-même et une zone de refroidissement entre la chemise et les parois de l'aube.

La chemise est alimentée en air de refroidissement par un tube 5E placé au niveau de la plate-forme extérieure et en communication avec une source d'air froid, prélevé au compresseur par exemple. Une partie de l'air admis traverse les perforations de la chemise 3 et est projetée contre la paroi interne des aubes, en raison de la différence de pression régnant entre le conduit formé par la chemise et sa zone périphérique délimitée par la chemise et la paroi interne de l'aube. Cet air est ensuite évacué dans la veine de gaz par des perforations calibrées, ménagées au bord de fuite de l'aube. Le reste de l'air, non utilisé dans l'aube, est guidé par un tube de liaison 1L, qui est situé sous la plate-forme intérieure 1I, vers d'autres parties de la machine à refroidir, comme le disque de turbine ou bien les paliers.

La chemise est introduite dans l'aube par l'ouverture ménagée au niveau de la plate-forme extérieure. Elle a été rendue solidaire de l'aube, généralement par brasage le long de la paroi de cette première ouverture de la cavité centrale, au niveau de la plate-forme extérieure. La partie opposée 3I de la chemise est guidée dans la seconde ouverture de l'aube formant une glissière 1G au niveau de la plate-forme intérieure 1I pour autoriser les déplacements relatifs entre la chemise et l'aube. En effet, l'aube est une pièce de fonderie, et la chemise est généralement obtenue par formage d'une tôle. En raison de la différence des matériaux et des modes de fabrication des deux pièces les constituant ainsi qu'entre les températures de fonctionnement, il s'ensuit une variation d'allongement entre l'aube et la chemise. La glissière assure ainsi le maintien de l'ensemble.

Compte tenu de la différence entre les modes d'élaboration du distributeur et de la chemise, le jeu au niveau de la glissière est relativement important. Ce jeu résulte notamment de la tolérance de fonderie dont la valeur est importante et de la tolérance de fabrication par formage de la chemise. Ce jeu crée une fuite d'air au niveau de la sortie de chemise puisque la pression dans la zone de refroidissement par impact est différente de celle dans le canal central en sortie de la chemise.

Dans le cas où la pression dans la zone de refroidissement par impact est plus faible que dans le canal central en sortie de chemise, la fuite d'air illustrée par la flèche F présente le premier inconvénient d'entraîner une surpression dans la zone périphérique. Cette surpression est préjudiciable à la qualité du refroidissement interne de l'aube et plus particulièrement au niveau de la zone du bord d'attaque qui en est la zone la plus chaude. Par ailleurs, cet air ne participe pas au refroidissement de l'aube puisqu'il est entraîné directement vers les orifices d'évacuation situés sur le bord de fuite.

La demanderesse s'est fixé comme objectif de réduire les fuites d'air dans la glissière d'une aube refroidie, en particulier d'une aube de distributeur et plus précisément d'une aube de distributeur basse pression.

La présente invention parvient à cet objectif avec une aube de moteur à turbine à gaz refroidie comprenant une pièce de fonderie et une chemise longitudinale obtenue par formage de tôle, la pièce de fonderie comportant un corps longitudinal pourvu d'une cavité longitudinale avec une première et une seconde ouvertures aux extrémités, la chemise étant montée dans la cavité en étant fixée par soudage ou brasage à la paroi de la première ouverture, et dont une portion d'extrémité est libre de coulisser dans la seconde ouverture formant glissière. L'aube est caractérisée par le fait que la portion d'extrémité et la glissière sont en contact glissant l'un par rapport à l'autre par des surfaces formées par usinage.

L'invention présente l'avantage de permettre dans le cas d'une telle liaison glissante entre une chemise obtenue par formage de tôle et une pièce de fonderie, de bénéficier des faibles tolérances de fabrication quand on façonne les pièces par usinage.

L'invention s'applique aux aubes fixes de distributeur et en particulier aux aubes de distributeur ayant une plate-forme à chaque extrémité de l'aube.

Les avantages induits dans le cas d'un distributeur de moteur à turbine à gaz comme celui montré sur la figure 1 sont importants. Une fuite plus faible signifie une diminution de la surpression dans la zone de refroidissement par impact. Le refroidissement des aubes en est amélioré et le niveau de température des aubes dans la zone du bord d'attaque est abaissé. Le risque d'endommagement des aubes, par formation de criques, sous sollicitations thermiques est donc diminué. Il s'ensuit une amélioration de la durée de vie du distributeur, basse pression en particulier ou , à durée de vie égale, une diminution du débit de ventilation nécessaire, donc une amélioration des performances ou du rendement. En particulier les opérations de maintenance et de réparation sont avantageusement réduites.

Conformément à une autre caractéristique la dite portion d'extrémité de la chemise est solidaire d'un insert d'étanchéité.

L'incorporation d'un insert entre la chemise et la paroi de l'ouverture présente l'avantage d'éviter les opérations d'usinage sur la portion d'extrémité de la chemise. Elle permet aussi d'ajuster le jeu avec une plus grande précision.

Conformément à un mode de réalisation particulier, l'insert d'étanchéité comporte un élément formant raccord à un tube de liaison.

L'invention porte également sur le procédé de fabrication d'une aube comprenant les étapes suivantes :
élaboration du corps de l'aube en fonderie avec une première ouverture à une extrémité et une seconde ouverture à l'autre extrémité, la seconde ouverture comprenant une paroi avec une surépaisseur formant reprise d'usinage,
formage d'une chemise avec une portion d'extrémité,
usinage de la surépaisseur de la paroi de la seconde ouverture du corps de l'aube de telle façon que la portion d'extrémité glisse dans la glissière avec un jeu déterminé compte tenu des tolérances d'usinage de la seconde ouverture,
montage de la chemise dans le corps de l'aube et brasage ou soudage de la chemise à la paroi de la première ouverture.

Conformément à une caractéristique de l'invention, on dispose un insert d'étanchéité entre la portion d'extrémité de la chemise et la seconde ouverture du corps de l'aube. En particulier, on met en place la chemise dans le corps de l'aube puis l'insert d'étanchéité entre la portion d'extrémité et la seconde ouverture. La paroi de l'insert d'étanchéité venant au contact de la paroi de l'ouverture est elle-même formée par usinage

Conformément à une autre caractéristique, on soude ou on brase l'insert d'étanchéité à la portion d'extrémité de la chemise.

D'autres caractéristiques et avantages de la présente invention ressortiront de la description faite ci-après, en référence aux dessins annexés qui illustrent deux modes de réalisation non limitatifs de l'invention.
La figure 1 est une vue en perspective d'une aube de distributeur de turbine de l'art antérieur.
La figure 2 est une vue en coupe d'une aube de distributeur conforme à l'invention.
La figure 3 est une coupe selon la direction III-III de la figure 2.
Les figures 4 et 5 sont des représentations schématiques de l'aube en cours de fabrication.
La figure 6 représente un autre mode de réalisation de l'invention.

Comme on le voit sur la figure 1, l'ensemble de l'art antérieur comprenant le corps longitudinal 1 de l'aube, les plate-formes extérieure 1E et intérieure 1I, constitue une seule pièce de fonderie. On observe que le tube de liaison 1L dans lequel débouche la cavité de l'aube, fait partie intégrante de la pièce de fonderie et en particulier de la plate-forme intérieure 1I. La glissière 1G est donc, selon cette disposition des composants de l'aube, non accessible par la plate-forme intérieure. Elle ne peut être formée que par un procédé de fonderie. La chemise 2 est elle-même obtenue à partir d'une tôle convenablement formée. Les tolérances de fabrication conduisent à l'existence d'un jeu non négligeable entre la portion 3I d'extrémité de la chemise 3 et la glissière 1G formée par la seconde extrémité de la cavité interne de l'aube. Pour y remédier, on prévoit, conformément à l'invention, de réaliser la glissière par usinage.

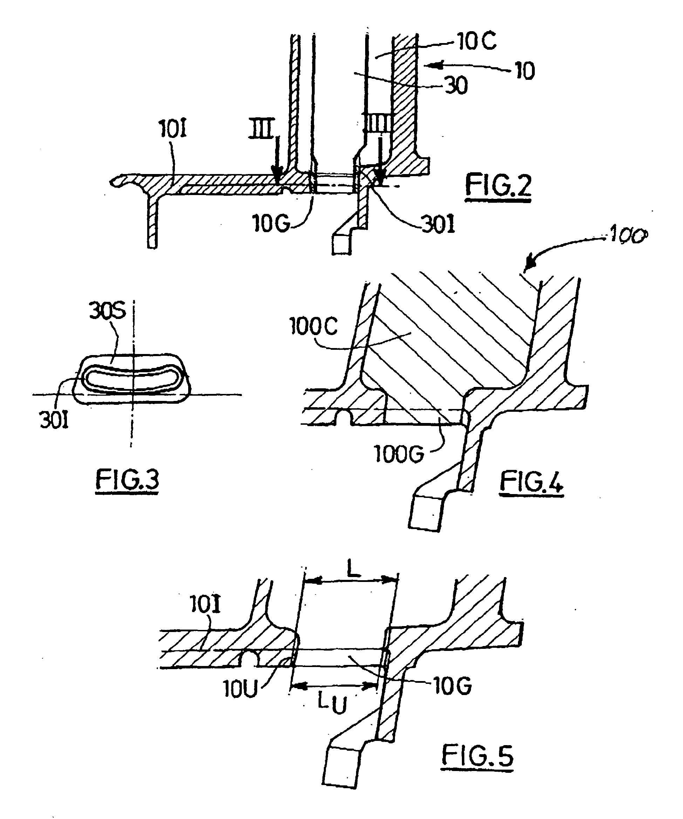

On a représenté sur la figure 2, la partie d'une aube fixe de distributeur située à proximité de sa plate-forme intérieure. Elle comporte un moyen de liaison entre la portion d'extrémité de la chemise et la glissière conforme à l'invention. La chemise 30 est insérée à l'intérieur de la cavité centrale 10C de l'aube 10. La portion d'extrémité 30I de la chemise est logée dans l'ouverture formant glissière 10G de l'aube, ménagée au niveau de la plate-forme intérieure 10I. Selon ce mode de réalisation préféré, un insert d'étanchéité 30S est disposé entre la portion d'extrémité 30I de la chemise 30 et la glissière 10G. Comme on le voit sur la figure 3, l'insert d'étanchéité est de forme sensiblement trapézoïdale. Il est conformé pour s'adapter à la glissière 10G avec un jeu déterminé sur son pourtour. Ce jeu tient compte de la dilatation des pièces pendant les différentes phases de fonctionnement. L'insert est percé de manière à recevoir la portion d'extrémité à laquelle il est brasé ou soudé. L'air de refroidissement circule dans la chemise depuis la première ouverture. Une partie de cet air traverse la paroi de la chemise par des orifices calibrés pour refroidir par impact la paroi interne de l'aube. Le reste de ce flux d'air est évacué par la portion d'extrémité de la chemise vers d'autres zones à refroidir de la machine. Les moyens de guidage de cet air n'ont pas été représentés.

Le montage de la chemise est effectué de la façon suivante. On introduit la chemise par la première ouverture de l'aube ménagée au niveau de la plate-forme extérieure non visible sur la figure 2. On enfonce la chemise dans la cavité de l'aube jusqu'à ce que la portion 30I de la chemise affleure l'ouverture intérieure formant glissière 10G. On observe que la face de la plate-forme 10I opposée à la veine de gaz est libre d'accès. On introduit l'insert par ce côté, on le glisse autour de la portion d'extrémité 30I, et on le maintient dans la position montrée sur la figure 2. On termine l'opération par le soudage ou le brasage de l'insert sur la chemise. Avantageusement, on procède simultanément au brasage de la chemise, à son autre extrémité, aux parois de la première ouverture au niveau de la plate-forme extérieure.

Afin de pouvoir monter la chemise avec cet insert d'étanchéité dans la glissière, on a fabriqué les pièces de la façon suivante.

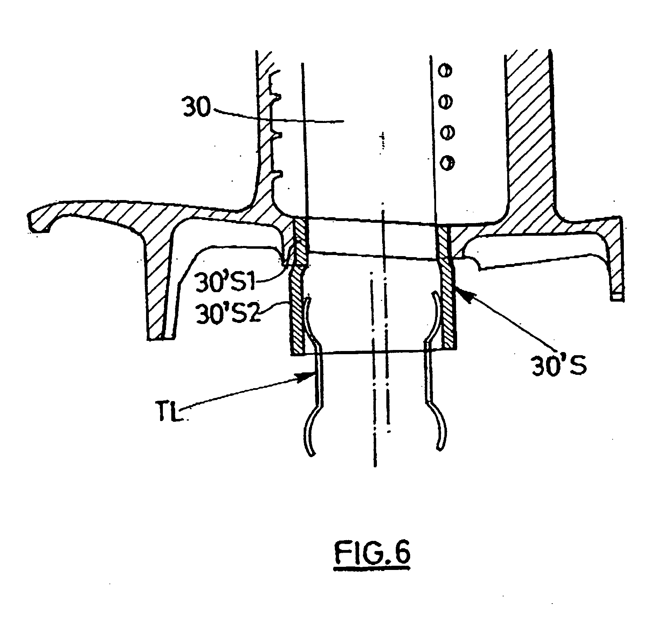

Lors de l'étape de fonderie, où le métal est coulé dans un moule ayant la forme en creux de la pièce, on utilise un noyau correspondant à la cavité du corps de l'aube. Ce noyau 100 est représenté schématiquement sur la figure 4. Il présente une partie 100G en saillie par rapport au corps 100C correspondant à la cavité de l'aube. Le métal en fusion est coulé autour du noyau et entre les autres parois du moule, non représentées. On a dimensionné la partie en saillie 100G de telle manière que la pièce après démoulage présente une surépaisseur dite d'usinage, que l'on enlève ensuite par une opération d'usinage. On a représenté sur la figure 5 la même partie de l'aubage sortie de fonderie. Le noyau a été éliminé. L'ouverture 10G, sortie de fonderie présente donc un dimensionnement Lu. Dans l'étape suivante, on procède à l'élimination sur le pourtour de l'ouverture d'une quantité de matière par usinage au moyen d'un outil approprié jusqu'à obtenir le dimensionnement L requis. L'épaisseur de matière éliminée par usinage est désignée reprise d'usinage. Avec les moyens actuels d'usinage, la tolérance de fabrication peut être aussi faible que +/- 0,025 mm. Elle est bien inférieure à la dispersion dimensionnelle en sortie de fonderie ou bien en formage.

On a fabriqué par ailleurs la chemise par mise en forme d'une tôle dans une presse, et l'insert a été réalisé avec un logement pour recevoir l'extrémité de la chemise.

Grâce à ce mode de fabrication des pièces, on a pu déterminer que l'on réduisait sensiblement les fuites d'air de refroidissement.

Ainsi l'usinage de l'ouverture formant la glissière permet d'obtenir une dispersion dimensionnelle réduite à +/- 0,025mm au lieu de +/- 0,075mm en sortie de fonderie. Pour ce qui concerne l'insert, le logement de la chemise étant comblé par la brasure ou la soudure aucune fuite n'intervient à ce niveau. Sa surface latérale étant usinée, la tolérance de fabrication est également de l'ordre de +/- 0,025 mm. Cette tolérance est plus faible que pour l'extrémité de la chemise façonnée par formage. La dispersion dimensionnelle dans ce dernier cas est habituellement de +/- 0,1 mm.

On parvient ainsi à mieux maîtriser le jeu dans la zone de guidage et les fuites qui en résultent. Par exemple, pour une aube de l'art antérieur telle que représentée à la figure 1 avec un jeu de valeur nominale X, on a en réalité une valeur X+/- 0,175 mm. Le débit de fuite est Y. Avec la solution de l'invention, on a déterminé que l'on pouvait réduire le jeu X de 15%, la tolérance de fabrication étant de +/-0,05 mm. Il s'ensuit une diminution de 80% du débit de fuite Y. A partir de cette réduction de 80% du débit de fuite, on a estimé que la température du bord d'attaque de l'aube était diminuée de 25°C. La durée de vie de celle-ci est donc augmentée.

On a représenté sur la figure 6 un second mode de réalisation de l'insert d'étanchéité. L'insert 30'S est composé d'une première partie 30'Sl formant élément d'étanchéité entre la portion d'extrémité 30I de la chemise et l'ouverture formant glissière 10G de l'aube. Elle comprend une deuxième partie 30' S2 prolongeant le premier. Cette partie a pour fonction de raccorder le canal de la chemise à un tube de liaison TL pour le guidage de l'air de refroidissement vers les autres parties du moteur qui se trouvent dans l'espace intérieur délimité par les plate-formes intérieures. Cet élément est en particulier de section circulaire.

Cette solution présente un intérêt particulier si on souhaite convertir les aubes fixes de l'art antérieur du type de celle qui est représentée sur la figure 1, et les équiper de la solution de l'invention. Pour la conversion et après avoir séparé la chemise de la pièce de fonderie, on commence par éliminer par usinage la partie de la plate-forme intérieure de l'aubage fixe qui comporte le tube de liaison. Lorsque le tube de liaison a été enlevé, on usine la plate forme intérieure au niveau de la glissière. On façonne l'ouverture de manière à obtenir un logement calibré pour l'insert que l'on a préparé par ailleurs.

La pièce de fonderie ainsi préparée peut être remontée avec la chemise que l'on glisse dans la cavité de l'aube depuis la première ouverture au niveau de la plate-forme extérieure qui a été dégagée. Lorsque la chemise est en place dans le logement de la glissière, on introduit l'insert sur la portion d'extrémité par la seconde ouverture, et on procède au brasage ou au soudage selon la technique souhaitée de l'insert sur la portion d'extrémité.

La description des deux modes de réalisation qui précède ne limite pas l'invention à la mise en place d'un insert d'étanchéité entre la portion d'extrémité et l'ouverture formant glissière. L'invention couvre également une réalisation où la portion d'extrémité est conformée de façon à pouvoir être usinée et être en contact glissant avec la paroi usinée de la glissière.

## Revendications

1. Aube de moteur à turbine à gaz refroidie comprenant une pièce de fonderie (1) et une chemise longitudinale (30) obtenue par formage de tôle, la pièce de fonderie comportant un corps longitudinal pourvu d'une cavité longitudinale (10C) avec une première et une seconde ouvertures à ses extrémités, la chemise étant montée dans la cavité en étant maintenue par soudage ou brasage à la paroi de la première ouverture, et dont une portion d'extrémité (30I) est libre de coulisser dans la seconde ouverture formant glissière (10G), **caractérisée par le fait que** la portion d'extrémité (30I) et la glissière (10G) sont en contact glissant l'un par rapport à l'autre le long de surfaces formées par usinage.

2. Aube selon la revendication 1, constituant une aube fixe de distributeur.

3. Aube selon la revendication 2 constituant une aube fixe de distributeur avec une plate-forme (10 E, 10I) à chaque extrémité du corps de l'aube.

4. Aube selon l'une des revendications 1 à 3 dont la chemise (30) est solidaire d'un insert d'étanchéité (30S) interposé entre la portion d'extrémité (30I) et la paroi de l'ouverture formant glissière (10G).

5. Aube selon la revendication 4 dont l'insert d'étanchéité (30S) comporte une partie (30'S2) formant raccord à un tube de liaison (TL).

6. Procédé de fabrication d'une aube selon l'une des revendications 1 à 5 comprenant les étapes suivantes :
élaboration du corps de l'aube en fonderie avec une première ouverture à une extrémité et une seconde ouverture à l'extrémité opposée, la seconde ouverture (10G) comprenant une paroi avec une surépaisseur formant reprise d'usinage,
formage d'une chemise (30) avec une portion d'extrémité (30I),
usinage de la surépaisseur de la paroi de la seconde ouverture (10G) du corps de l'aube et de telle façon que la portion d'extrémité glisse dans la glissière avec un jeu déterminé compte tenu de la tolérance d'usinage,
montage de la chemise (30) dans le corps de l'aube et brasage ou soudage de la chemise à la paroi de la première ouverture.

7. Procédé selon la revendication précédente selon lequel on dispose un insert d'étanchéité (30S) entre la portion d'extrémité (30I) de la chemise et la paroi de seconde ouverture du corps de l'aube.

8. Procédé selon la revendication précédente dans lequel on met en place la chemise (30) dans le corps de l'aube puis l'insert d'étanchéité (30S) entre la portion d'extrémité et la paroi de la seconde ouverture.

9. Procédé selon la revendication précédente selon lequel on soude ou on brase l'insert d'étanchéité à la portion d'extrémité de la chemise.

## Claims

1. A cooled gas turbine engine blade comprising a foundry part (1) and a longitudinal sleeve (30) obtained by the forming of metal sheet, the foundry part including a longitudinal body provided with a longitudinal cavity (10C) with first and second apertures at its ends, the sleeve being mounted in the cavity being held therein by soldering or brazing to the wall of the first aperture, and an end portion of which (30I) is free to slide in the second aperture (10G) forming a slide, **characterized by** the fact that the end portion (30I) and the slide (10G) are in a sliding contact relatively to each other along surfaces formed by machining.

2. The blade according to claim 1, forming a fixed nozzle blade.

3. The blade according to claim 2, forming a fixed nozzle blade with a platform (10E, 10I) at each end of the body of the blade.

4. The blade according to any of claims 1 to 3, the sleeve of which (30) is integral with a sealing insert (30S) interposed between the end portion (30I) and the wall of the slide-forming aperture (10G).

5. The blade according to claim 4, the sealing insert (30S) of which includes a portion (30'S2) forming a connection to a connecting tube (TL).

6. A method for manufacturing a blade according to any of claims 1 to 5, comprising the following steps:
developing the body of the blade in a foundry with a first aperture at one end and a second aperture at the opposite end, the second aperture (10G) comprising a wall with an overthickness forming a machining rework,
forming a sleeve (30) with an end portion (30I),
machining the overthickness of the wall of the second aperture (10G) of the body of the blade in such a way that the end portion slides in the slide with a determined play taking machining tolerance into account,
mounting the sleeve (30) in the body of the blade and brazing or soldering the sleeve to the wall of the first aperture.

7. The method according to the preceding claim, according to which a sealing insert (30S) is positioned between the end portion (30I) of the sleeve and the wall of the second aperture of the body of the blade;

8. The method according to the preceding claim, wherein the sleeve (30) is put into place in the body of the blade and the sealing insert (30S) is then put into place between the end portion and the wall of the second aperture.

9. The method according to the preceding claim, according to which the sealing insert is soldered or brazed to the end portion of the sleeve.

## Patentansprüche

1. Gekühlte Gasturbinentriebwerks-Schaufel, umfassend: ein Gussteil (1) und eine longitudinale Verkleidung (30), welche durch Formen von Blech erhalten wird, wobei das Gussteil einen longitudinalen Körper umfasst, welcher mit einem longitudinalen Hohlraum (10C) mit einer ersten und einer zweiten Öffnung an seinen Enden versehen ist, wobei die Verkleidung im Hohlraum derart montiert ist, dass sie mittels Schweißens oder Lötens an der Wand der ersten Öffnung gehalten wird, und ein Endteil (30I) von ihr die Freiheit besitzt, in die/der zweite(n) Öffnung zu gleiten, welche eine Gleitschiene (10G) bildet, **dadurch gekennzeichnet, dass** der Endteil (30I) und die Gleitschiene (10G) sich zueinander in entlang durch maschinelle Bearbeitung gebildeter Flächen gleitendem Kontakt befinden.

2. Schaufel gemäß Anspruch 1, welche eine feststehende Verteiler-Schaufel bildet.

3. Schaufel gemäß Anspruch 2, welche eine feststehende Verteiler-Schaufel mit einer Plattform (10E, 10I) an jedem Ende des Schaufel-Körpers bildet.

4. Schaufel gemäß einem der Ansprüche 1 bis 3, wobei die Verkleidung (30) mit einem Dicht-Einsatz (30S) verbunden ist, welcher zwischen dem Endteil (30I) und der Wand der Öffnung, welche die Gleitschiene (10G) bildet, angeordnet ist.

5. Schaufel gemäß Anspruch 4, deren Dicht-Einsatz (30S) einen Teil (30'S2) umfasst, welcher einen Anschluss zu einem Verbindungs-Rohr (TL) herstellt.

6. Verfahren zum Herstellen einer Schaufel gemäß einem der Ansprüche 1 bis 5, welches die folgenden Schritte umfasst:
Erstellen des Körpers der Schaufel in Guss mit einer ersten Öffnung an einem Ende und einer zweiten Öffnung am entgegengesetzten Ende, wobei die zweite Öffnung (10G) eine Wand mit einer Überdicke umfasst, welche einen Fortsatz für maschinelle Bearbeitung bildet,
Ausbilden einer Verkleidung (30) mit einem Endteil (30I),
maschinelle Bearbeitung der Überdicke der Wand der zweiten Öffnung (10G) des Schaufel-Körpers und in der Weise, dass der Endteil in der Gleitschiene mit einem Spiel gleitet, welches unter Berücksichtigung der maschinellen Bearbeitung-Toleranz bestimmt ist,
Montage der Verkleidung (30) im Schaufelkörper und Löten oder Schweißen der Verkleidung an die Wand der ersten Öffnung.

7. Verfahren gemäß dem vorhergehenden Anspruch, wobei ein Dicht-Einsatz (30S) zwischen den Endteil (30I) der Verkleidung und der Wand der zweiten Öffnung des Schaufelkörpers angeordnet wird.

8. Verfahren gemäß dem vorhergehenden Anspruch, wobei die Verkleidung (30) im Schaufelkörper, (und) dann der Dicht-Einsatz (30S) zwischen dem Endteil und der Wand der zweiten Öffnung angeordnet wird.

9. Verfahren gemäß dem vorhergehenden Anspruch, wobei der Dicht-Einsatz am Endteil der Verkleidung angeschweißt oder angelötet wird.
